# FASCICULE DE BREVET EUROPEEN

(11) **EP 2 723 002 B1**
(45) Date de publication et mention de la délivrance du brevet: **21.11.2018**
(21) Numéro de dépôt: 13188039.5
(22) Date de dépôt: 10.10.2013
(51) Int. Cl.: H04B 7/204, H04B 7/185

(54) **Système de télécommunication par satellite permettant d'assurer un trafic en étoile et un trafic maillé**
Telekommunikationssystem über Satellit, das die Sicherstellung eines stern- und eines netzförmigen Datenverkehrs ermöglicht
Satellite telecommunication system capable of providing traffic with star and mesh topology

(30) Priorité: 18.10.2012 FR 1202783
(43) Date de publication de la demande: 23.04.2014
(73) Titulaire: Thales, 92400 Courbevoie (FR)
(72) Inventeur: Gayrard, Jean-Didier, 31270 Cugnaux (FR); Le Boulc'h, Didier, 31037 Toulouse Cedex 1 (FR); Melet, Eric, 31037 Toulouse Cedex 1 (FR)
(74) Mandataire: Esselin, Sophie

(56) Documents cités:
- WO-A1-95/28015
- WO-A2-01/97408
- WO-A2-2008/115949
- US-A1- 2006 205 347

## Description

La présente invention concerne un système de télécommunication par satellite permettant d'assurer un trafic en étoile et un trafic maillé. Elle s'applique notamment au domaine des télécommunications par satellite permettant de couvrir une zone de couverture globale et des zones de couvertures de théâtre d'opération, par exemple dans le cadre des applications de type militaire ou gouvernemental, et de servir à la fois des terminaux utilisateurs fixes et des terminaux utilisateurs mobiles.

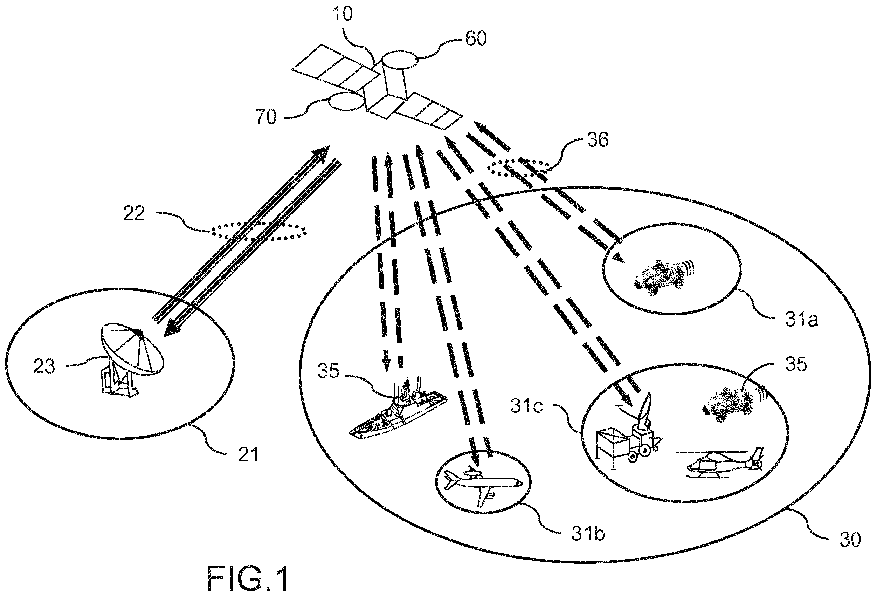

De manière connue, un système de télécommunication par satellite destiné à assurer un service vers des terminaux fixes et des terminaux mobiles comporte, comme représenté par exemple sur la figure 1, un satellite géostationnaire 10, au moins une station d'ancrage terrestre 23 (en anglais : gateway) localisée dans une zone de couverture de métropole 21 choisie, par exemple un pays, illuminée par un faisceau provenant d'une première antenne d'émission et de réception 70 située à bord du satellite 10, un ensemble de plusieurs terminaux utilisateurs 35 répartis dans une zone de service, par exemple une face de la Terre vue du satellite 10. La zone de service comporte une zone de couverture globale 30 et plusieurs zones de couverture de théâtre d'opération 31a, 31b, 31c de différentes formes et de différentes tailles, localisées à différentes positions dans la zone de couverture globale 30, les zones de couverture de théâtre pouvant être très étendues et concerner une région, comme par exemple la zone régionale 31c. Ces diverses zones de couverture globale 30 et de théâtre 31a, 31b, 31c, sont illuminées par un deuxième système d'antennes 60 du satellite 10, qui élabore un faisceau couvrant la zone de couverture globale et un faisceau additionnel par zone de couverture de théâtre. Ainsi, sur l'exemple de la figure 1, le système d'antennes 60 élabore quatre faisceaux différents couvrant respectivement la zone de couverture globale 30 et les trois zones de couverture de théâtre 31a, 31b, 31c. L'ensemble de terminaux comporte des terminaux fixes, des terminaux transportables et des terminaux mobiles, par exemple des véhicules terrestres, des bateaux, des aéronefs, qui sont situés, dans les zones de couverture globale et de théâtre de la zone de service, à différentes positions, respectivement terrestre, maritime ou aérienne. La station d'ancrage 23 communique avec le satellite 10 par une première liaison de radiocommunication bidirectionnelle 22, les terminaux utilisateurs 35 communiquent avec le satellite 10 par des secondes liaisons de radiocommunication bidirectionnelles 36. Le rôle du satellite est de relier, par des signaux de radiocommunication, la station d'ancrage 23 aux terminaux utilisateurs 35 et les terminaux utilisateurs entre eux. Le trafic entre la station d'ancrage 23 et les terminaux utilisateurs 23 localisés dans les zones de couverture globale et de théâtre est appelé trafic en étoile (en anglais : star), le trafic entre deux terminaux utilisateurs est appelé trafic maillé (en anglais : mesh). Le trafic maillé est un trafic interspot lorsqu'il concerne des communications entre deux terminaux localisés dans deux zones de couverture différentes, Le trafic maillé est un trafic intraspot (en anglais : loopback) lorsqu'il concerne des communications entre deux terminaux localisés dans la même zone de couverture. Les zones de couverture de théâtre sont des zones géographiques où se déroulent des opérations et où les terminaux actifs sont concentrés. Ces zones de couverture de théâtre sont positionnables n'importe où à l'intérieur de la zone de couverture globale 30 et sont de plusieurs types selon leur surface. Dans l'exemple de la figure 1, les zones de couverture de théâtre sont de trois tailles différentes au sol correspondant respectivement à un spot étroit 31b qui peut, par exemple, faire 600 km de diamètre au nadir, à un spot théâtre 31a qui peut, par exemple, faire 2000 km de diamètre au nadir et à un spot régional 31c qui peut, par exemple, faire 4000 km de diamètre au nadir. Des canaux de fréquence différents sont alloués à chaque zone de couverture de théâtre 31a, 31b, 31c et à la zone de couverture globale 30. Dans le cas où les liaisons 22 entre la station d'ancrage 23 et le satellite 10 sont en bande X, le plan de fréquence doit inclure un autre canal de fréquence alloué à la zone de couverture de métropole 21 de la station d'ancrage 23.

Ces systèmes de télécommunication connus présentent plusieurs inconvénients. Un premier inconvénient est le taux faible ou inexistant de réutilisation de fréquence. En effet, la possibilité de réutiliser les mêmes bandes ou canaux de fréquence dans plusieurs zones de couverture différentes pour augmenter la capacité totale du système en bande passante est structurellement limitée ou impossible. D'une part, la bande de fréquence allouée à la zone de couverture globale 30 ne peut pas être réutilisée dans des zones de couverture de théâtre 31a, 31b, 31c, ni dans la zone de couverture de métropole 21, d'autre part, les possibilités de réutiliser la même bande de fréquence entre deux zones de couverture de théâtre dépend de la distance séparant les deux zones de couverture et des performances d'isolation entre les deux faisceaux correspondants élaborés par le système d'antennes 60 du satellite 10. Les positions des zones de couverture de théâtre sont quelconques, variables dans le temps et difficilement prévisibles puisque dépendantes du contexte géopolitique mondial, des catastrophes naturelles,..., il existe donc toujours des cas opérationnels pour lesquels il est impossible de réutiliser les canaux de fréquences entre deux zones de couverture différentes. Ainsi la bande passante totale garantie d'un système de télécommunication à usage militaire ou gouvernemental selon l'art antérieur est limitée à la bande totale allouée au système, par exemple 500 MHz en bande X entre 7 et 8 GHz, la bande passante des canaux de fréquence alloués aux zones de couverture globale et de théâtre est également limitée ainsi que les performances d'un éventuel dispositif d'antibrouillage basé sur les techniques d'étalement de spectre, étalement par séquence directe ou étalement par évasion de fréquence, dans les zones de couverture.

Un deuxième inconvénient est la faible performance intrinsèque de gain du système d'antennes du satellite dans la zone de couverture globale et dans les zones de couverture de théâtre larges, comme les spots régionaux par exemple. Ainsi quelles que soient les techniques mises en oeuvre pour la conception des antennes du satellite, antenne active à rayonnement direct, antenne à réflecteur mécanique, ou autre type d'antenne, le gain des antennes dans la zone de couverture globale plafonne à moins de 18 dB en bord de couverture et dans une zone de couverture de théâtre de 3000 km de diamètre, le gain des antennes plafonne à moins de 30 dB en bord de couverture. Il résulte de ces contraintes sur les performances de gain des antennes du satellite, une grande inhomogénéité des performances radiofréquence du satellite d'un type de couverture à l'autre et donc une grande inhomogénéité de la qualité des liaisons entre les zones de couverture pour un même type de terminal utilisateur. En particulier, la très faible performance de la sensibilité du satellite dans les zones de couverture globale ou régionale limite le débit binaire offert sur la liaison montante, du terminal vers le satellite pour les petits terminaux mobiles ou transportables dont les performances radiofréquence sont limitées. De plus l'établissement de liaisons du satellite vers ces petits terminaux fixes ou mobiles demande des ressources de puissance radiofréquence importantes pour la charge utile du satellite ce qui limite opérationnellement soit le nombre de liaisons établies, soit le débit de chaque liaison.

Ces inconvénients conduisent soit à une spécialisation des terminaux en fonction de la zone de couverture, les performances du terminal, typiquement le diamètre de l'antenne, sont alors définies en fonction de la zone de couverture dans laquelle ce terminal devra opérer, soit à un surdimensionnement de tous les terminaux pour leur permettre de communiquer dans tout type de zone de couverture. En outre, ces différents inconvénients restreignent les possibilités d'augmenter la capacité totale du système de télécommunication en termes de débit binaire total et de nombre de terminaux actifs simultanément.

Le document WO95/28015 divulgue un système de télécommunication par satellite selon l'art antérieur. Le but de l'invention est de réaliser un système de télécommunication par satellite permettant d'assurer un trafic en étoile et un trafic maillé ne comportant pas les inconvénients des systèmes existants, permettant d'avoir un taux de réutilisation de fréquence important et constant, de garantir un gain d'antenne du satellite important et homogène, indépendant de la surface et du type, global ou régional, des zones de couverture et permettant d'augmenter à la demande, de façon temporaire, les ressources du satellite en bande passante et en puissance radiofréquence dans des zones géographiques sélectionnables et repositionnables en fonction des besoins.

Pour cela, l'invention concerne un système de télécommunication par satellite permettant d'assurer un trafic en étoile et un trafic maillé comportant un satellite, au moins une station d'ancrage terrestre localisée dans une zone de métropole, une zone de couverture globale et plusieurs terminaux utilisateurs, fixes ou mobiles, répartis dans la zone de couverture globale, une liaison de radiocommunication bidirectionnelle entre la station d'ancrage et le satellite, des liaisons de radiocommunication bidirectionnelles entre le satellite et les terminaux utilisateurs, une liaison de communication bidirectionnelle de télécommande et de télémesure entre la station d'ancrage et le satellite. La zone de couverture globale est couverte par un premier ensemble de spots de tailles identiques, se recouvrant partiellement et formant un maillage cellulaire régulier et par au moins un deuxième ensemble de spots locaux, irrégulièrement répartis dans la zone de couverture globale, et se superposant géographiquement sur des spots du premier ensemble de spots. Les spots du premier ensemble de spots ont des premières bandes de fréquence allouées correspondant à N canaux différents, où N est un nombre entier supérieur à 1, de même capacité en fréquence, un même canal étant utilisé par plusieurs spots différents espacés au sol, les spots locaux du deuxième ensemble de spots ont une deuxième bande de fréquence allouée correspondant à un canal spécifique ayant une capacité en fréquence augmentée, supérieure à la capacité en fréquence des canaux des spots du premier ensemble de spots, le canal spécifique du deuxième ensemble de spots étant différent des canaux du premier ensemble de spots.

La zone de couverture globale peut en outre être couverte par un troisième ensemble de spots locaux, irrégulièrement répartis dans la zone de couverture globale, et se superposant géographiquement sur des spots du premier ensemble de spots, les spots locaux du troisième ensemble de spots ayant une troisième bande de fréquence allouée correspondant à un canal spécifique additionnel à capacité en fréquence augmentée supérieure à la capacité en fréquence des canaux des spots du premier ensemble de spots, le canal spécifique additionnel du troisième ensemble de spots locaux étant différent des canaux alloués aux spots du premier ensemble de spots et du canal spécifique alloué aux spots du deuxième ensemble de spots locaux.

Avantageusement, le satellite comporte un premier système d'antennes d'émission et de réception multifaisceaux illuminant d'une part, la totalité de la zone de couverture globale et formant, au sol, le maillage cellulaire régulier de spots du premier ensemble de spots et illuminant d'autre part, localement, des zones géographiques de la couverture globale où sont concentrés des terminaux utilisateurs, par les spots locaux irrégulièrement répartis du deuxième ensemble de spots, les zones géographiques illuminées par les spots locaux du deuxième ensemble de spots étant sélectionnées et activées par la station d'ancrage par l'intermédiaire de la liaison de communication bidirectionnelle de télécommande et de télémesure.

Avantageusement, le satellite comporte en outre au moins un processeur numérique transparent destiné à filtrer et router le trafic maillé intra-spot et inter-spot entre des terminaux utilisateurs situés dans un même spot ou dans deux spots différents et le trafic étoilé entre terminaux situés dans la zone de couverture globale et la station d'ancrage située dans la zone de couverture de métropole, le processeur numérique transparent comportant des ports d'entrée connectés au premier système d'antennes d'émission et de réception multifaisceaux par un ensemble de chaînes de réception et des ports de sortie connectés au premier système d'antennes d'émission et de réception multifaisceaux par un ensemble de chaînes d'émission, chaque chaîne de réception comportant un multiplexeur de fréquence assurant le multiplexage en fréquence et la sélection de canaux différents présentés sur une même entrée du processeur numérique transparent et chaque chaîne d'émission comportant un démultiplexeur en fréquence assurant le démultiplexage et la sélection des canaux différents provenant d'une même sortie du processeur numérique transparent.

Avantageusement, l'ensemble de chaînes de réception comporte en outre des amplificateurs à faible bruit LNA équipés d'un limiteur de puissance.

Avantageusement, l'ensemble de chaînes d'émission comporte en outre des amplificateurs de puissance multiports MPA qui assurent l'amplification combinée et mutualisée des signaux de radiocommunication destinés aux terminaux utilisateurs localisés dans plusieurs spots différents.

Préférentiellement, le multiplexeur en fréquence de chaque chaîne de réception comporte N coupleurs et un commutateur à quatre positions différentes, la position de chaque commutateur étant commandée par la station d'ancrage, chaque commutateur sélectionnant un canal différent choisi parmi tous les canaux alloués aux spots du premier ensemble de spots et parmi toutes les combinaisons couplant le canal spécifique alloué au deuxième ensemble de spots avec l'un desdits canaux alloués aux spots du premier ensemble de spots, le canal sélectionné par chaque commutateur dépendant de la position du commutateur correspondant.

Avantageusement, le démultiplexeur en fréquence comporte une architecture symétrique de l'architecture du multiplexeur en fréquence correspondant.

Avantageusement, le satellite peut comporter au moins un premier processeur numérique transparent destiné à filtrer et router le trafic correspondant aux spots du premier ensemble de spots et au moins un deuxième processeur destiné à filtrer et router le trafic correspondant aux spots locaux du deuxième ensemble de spots.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma d'un exemple de système de télécommunication par satellite, selon l'art antérieur ;
- figure 2 : un schéma d'un exemple de système de télécommunication par satellite à couverture globale multifaisceaux, selon l'invention ;
- figure 3a : un schéma illustrant un exemple de système de télécommunication par satellite à couverture globale multifaisceaux et à réutilisation de fréquences dans le cas d'une utilisation de cinq couleurs différentes, selon l'invention ;
- figures 3b : un schéma illustrant un exemple d'allocation de sous-bandes de fréquence aux multifaisceaux élaborés par le système de la figure 3a, selon l'invention ;
- figures 3c et 3d : deux schémas illustrant deux exemples de configuration des spots permettant d'assurer respectivement une couverture de théâtre comportant un spot local à capacité augmentée et une couverture de théâtre ne comportant que des spots à capacité normale, selon l'invention ;
- figure 4a : un schéma illustrant un exemple de système de télécommunication par satellite à couverture globale multifaisceaux et à réutilisation de fréquences dans le cas d'une utilisation de six couleurs différentes, selon l'invention ;
- figure 4b : un schéma illustrant un exemple d'allocation de sous-bandes de fréquence aux multifaisceaux élaborés par le système de la figure 4a, selon l'invention ;
- figure 5 : un schéma synoptique d'un exemple d'architecture de la charge utile du satellite selon un premier mode de réalisation de l'invention ;
- figures 6a et 6b: un exemple d'architecture électrique des multiplexeurs de canaux CMUX et des démultiplexeurs de canaux DMUX pouvant être utilisés dans la charge utile représentée sur la figure 5, dans le cas de l'utilisation de cinq couleurs différentes, selon l'invention ;
- figure 7 : un schéma synoptique d'un exemple d'architecture de la charge utile du satellite selon un deuxième mode de réalisation de l'invention ;
- figure 8a et 8b: un exemple d'architecture électrique des multiplexeurs de canaux CMUX et des démultiplexeurs de canaux DMUX pouvant être utilisés dans la charge utile représentée sur la figure 7, dans le cas de l'utilisation de cinq couleurs différentes, selon l'invention ;

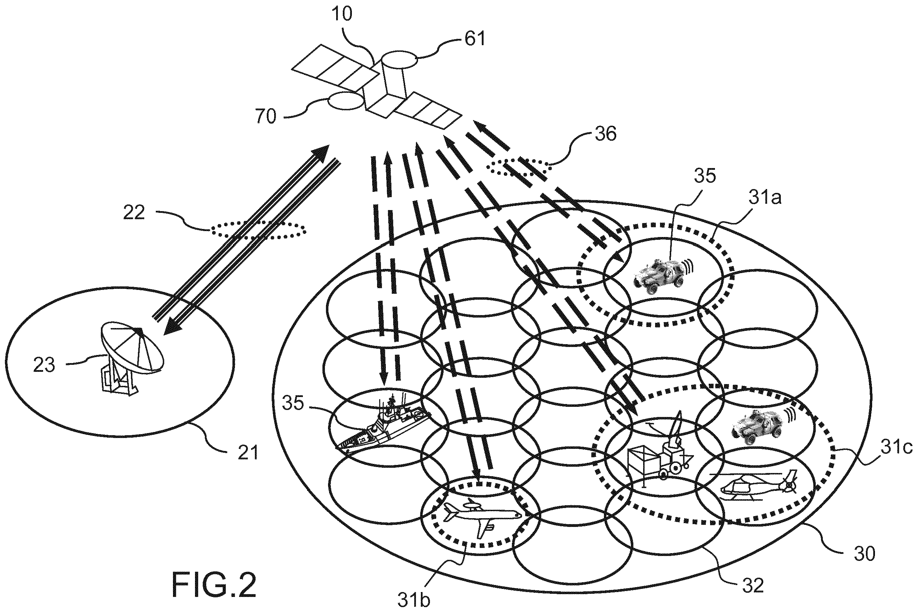

Comme représenté sur l'exemple de la figure 2, le système de télécommunication par satellite selon l'invention comporte un satellite géostationnaire 10, une ou plusieurs stations d'ancrage terrestres 23 localisées dans une zone géographique de couverture de métropole 21, une population de terminaux utilisateurs 35 fixes, transportables ou mobiles, répartis dans une zone géographique de couverture globale 30 et plus ou moins concentrés dans des zones géographiques de couverture de théâtre d'opération 31a, 31b, 31c représentées en traits pointillés. La zone de couverture station peut être localisée à l'intérieur ou à l'extérieur de la zone de couverture globale. La station d'ancrage 23 communique avec le satellite 10 au moyen de signaux de radiocommunication station bidirectionnels 22, les terminaux utilisateurs 35 communiquent avec le satellite 10 au moyen de signaux de radiocommunication utilisateurs bidirectionnels 36. Les signaux de radiocommunication utilisateurs 36 peuvent utiliser par exemple la bande X ou d'autres bandes de fréquence. De même, les signaux de radiocommunication station 22 peuvent utiliser par exemple la bande X ou la bande Ka, ou la bande Q, ou une autre bande de fréquence. Des signaux de radiocommunication bidirectionnels de télécommande et de télémesure TTC sont également échangés entre la station d'ancrage 23 et le satellite 10.

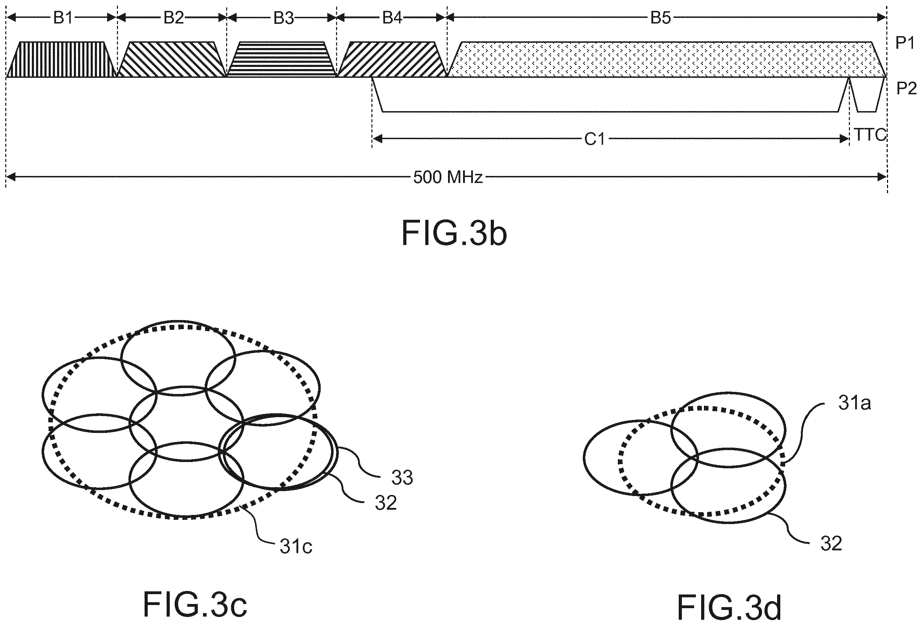

Le satellite 10 comporte un premier système d'antennes d'émission et de réception multifaisceaux 61 qui élabore un premier ensemble de faisceaux multiples illuminant la totalité de la zone de couverture globale 30 et formant, au sol, un maillage cellulaire régulier de spots 32 couvrant la zone de couverture globale, et au moins un deuxième ensemble de faisceaux illuminant uniquement certaines régions géographiques locales sélectionnées de la zone de couverture globale 30 et formant, au sol, un deuxième ensemble de spots locaux 33. Les spots locaux 33 du deuxième ensemble de spots se confondent ou se superposent géographiquement à certains des spots 32 du premier ensemble de spots, comme représenté par exemple sur la figure 3c. Les spots 32 du premier ensemble de spots forment un maillage cellulaire bidimensionnel de la zone de couverture globale, deux spots adjacents pouvant se recouvrir partiellement de manière qu'il n'y ait pas de trou de couverture. Les spots locaux 33 du deuxième ensemble de spots sont irrégulièrement répartis dans différentes régions géographiques de la zone de couverture globale, sélectionnées en fonction des besoins de trafic et repositionnables à la demande en fonction des ordres de télécommande transmis par la station d'ancrage 23. Le satellite comporte également un deuxième système d'antennes d'émission et de réception 70 qui élabore un faisceau unique, correspondant à un spot unique, couvrant la zone de couverture de métropole 21. La superposition de deux spots 32, 33 du premier et du deuxième ensemble de spots permet d'augmenter localement la capacité du satellite dans des zones géographiques où sont concentrés des terminaux utilisateurs 35 et où le trafic est très important. Les spots locaux 33 du deuxième ensemble de spots peuvent être déplacés à volonté et être positionnés en n'importe quel endroit géographique de la zone de couverture globale, sur n'importe quel spot 32 préexistant du premier ensemble de spots.

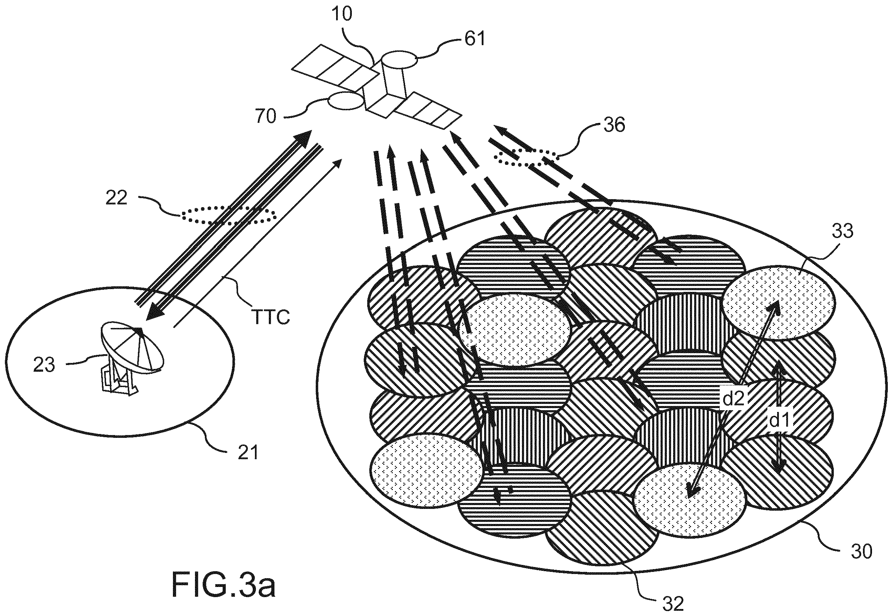

Les figures 3a et 3b illustrent un premier exemple d'allocation de sous-bandes de fréquence aux spots élaborés par le système de la figure 2a dans le cas d'une utilisation de cinq canaux différents. La bande de fréquence totale allouée au système de télécommunication par satellite, par exemple 500 MHz en bande X, peut être divisée en plusieurs sous-bandes de fréquence différentes, par exemple en cinq sous-bandes de fréquence différentes, appelées aussi couleurs ou canaux, B1, B2, B3, B4, B5 fonctionnant par exemple dans une première polarisation P1. Sur la figure 2a, les quatre canaux B1 à B4 ont la même largeur de bande de fréquence et le canal B5 a une largeur supérieure à celle des quatre canaux B1 à B4. Les N canaux B1 à B4, où N est un nombre entier supérieur à 1, de même largeur de bande de fréquence, sont alloués aux spots 32 du premier ensemble de spots. Le canal B5, appelé canal spécifique à capacité en fréquence augmentée, est alloué aux spots locaux 33 du deuxième ensemble de spots. L'allocation des N canaux B1 à B4 aux spots 32 du premier ensemble de spots met en oeuvre une technique bien connue de réutilisation de fréquence pour couverture cellulaire. Chaque canal B1 à B4 est alloué à un sous-ensemble de spots 32 du premier ensemble de spots, un même canal étant alloué à plusieurs spots 32 différents suffisamment distants les uns des autres pour réutiliser la même bande de fréquence. Par exemple sur la figure 3a, 24 spots différents sont formés dans la zone de couverture globale 30 et chaque canal B1 à B4 est alloué à 6 spots différents choisis parmi les 24. Cette allocation se fait de telle façon que la distance d1 entre deux spots ayant le même canal alloué soit maximisée. Le canal spécifique B5 est un canal alloué à un sous-ensemble de spots locaux 33 du deuxième ensemble de spots, par exemple à 4 spots différents sur la figure 3a. Cette allocation se fait de telle façon que la distance d2 entre deux spots 33 soit maximisée. Un canal C1 dans la polarisation orthogonale P2 à la polarisation P1 des canaux B1 à B5 est alloué au spot couvrant la zone de couverture de métropole 21 et un canal TTC est alloué à la transmission des signaux de radiocommunication de télécommande et de télémesure entre la station d'ancrage 23 et le satellite 10.

Le nombre et la position des spots locaux 33 du deuxième ensemble de spots sont activés ou mis en service de façon temporaire par reconfiguration de la charge utile du satellite 10 et du système d'antennes multifaisceaux 61. La reconfiguration de la charge utile est commandée par la station d'ancrage 23 grâce aux télécommandes transportées par les signaux de radiocommunication du canal TTC.

Ainsi, la zone de couverture globale 30 est couverte par le premier ensemble de spots 32 fonctionnant dans l'une des sous-bandes de fréquence correspondant par exemple aux N canaux B1 à B4, ces sous-bandes de fréquence étant réutilisées pour différents spots 32 espacés les uns des autres. Chaque zone de couverture de théâtre d'opération 31a, 31b, 31c est couverte par un ou plusieurs spots pris dans le premier ensemble de spots 32 fonctionnant dans l'une des sous-bandes de fréquence correspondant aux N canaux B1 à B4, certains de ces spots pouvant être superposés à un spot local 33 du deuxième ensemble de spots 33 fonctionnant dans la sous-bande de fréquence correspondant au canal spécifique B5 et comporter une capacité augmentée. Sur l'exemple de la figure 3c, le spot régional 31c est couvert par un maillage de huit spots, les huit spots étant constitués de sept spots 32 appartenant au premier ensemble de spots et d'un spot local 33 à capacité augmentée appartenant au deuxième ensemble de spots. Sur l'exemple de la figure 3d, le spot de théâtre 31a est couvert par un maillage de trois spots 32 appartenant au premier ensemble de spots. L'augmentation de la capacité dans une zone de couverture de théâtre d'opération est réalisée en activant le spot local 33 du deuxième ensemble de spots qui couvre le mieux la zone de couverture de théâtre. Dans l'exemple de la figure 3c, un spot local 33 du deuxième ensemble de spots couvre une zone périphérique de la zone de couverture de théâtre régionale 31c pour y augmenter la capacité.

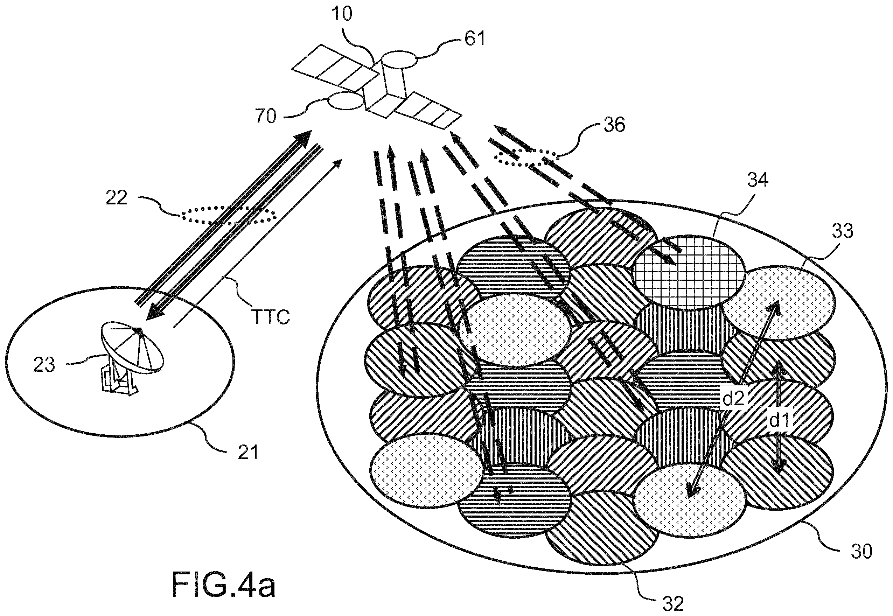

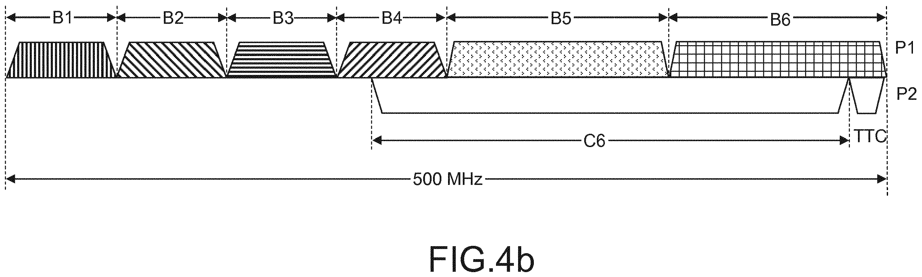

Le nombre total de canaux peut, bien entendu, être différent de cinq et le nombre de canaux à capacité augmentée peut, bien entendu, être supérieur à un. Ainsi, le deuxième exemple de plan de fréquence représenté sur la figure 4b comporte six canaux différents dont deux canaux spécifiques B5 et B6 à capacité augmentée, dans la polarisation P1, le canal B6 étant alloué à un troisième ensemble de spots comme représenté sur le système de la figure 4a. Dans ce cas, la zone de couverture globale 30 est couverte par trois ensembles de spots, le premier et le deuxième ensemble de spots étant constitués des spots 32 et des spots locaux 33, le troisième ensemble de spots étant constitué de spots 34 locaux, irrégulièrement répartis dans la zone de couverture globale 30, et se superposant géographiquement sur des spots 32 du premier ensemble de spots. Les spots 34 locaux du troisième ensemble de spots ont une troisième bande de fréquence allouée correspondant au canal spécifique additionnel B6 et comporte une capacité en fréquence augmentée, supérieure à la capacité en fréquence des canaux B1 à B4 des spots 32 du premier ensemble de spots. Le canal spécifique additionnel B6 alloué aux spots locaux 34 du troisième ensemble de spots est différent des canaux B1 à B4 alloués aux spots 32 du premier ensemble de spots et du canal spécifique B5 alloué aux spots locaux 33 du deuxième ensemble de spots locaux.

Dans tous les exemples représentés sur les figures 3b et 4b, un canal de fréquence C1 fonctionnant en bande X dans une deuxième polarisation P2, orthogonale à la polarisation P1 des canaux B1 à B6, est alloué à la station d'ancrage 23. Cependant il est également possible d'allouer, à la station d'ancrage 23, un canal de fréquence dans une bande de fréquence différente, comme par exemple la bande Ka ou la bande Q.

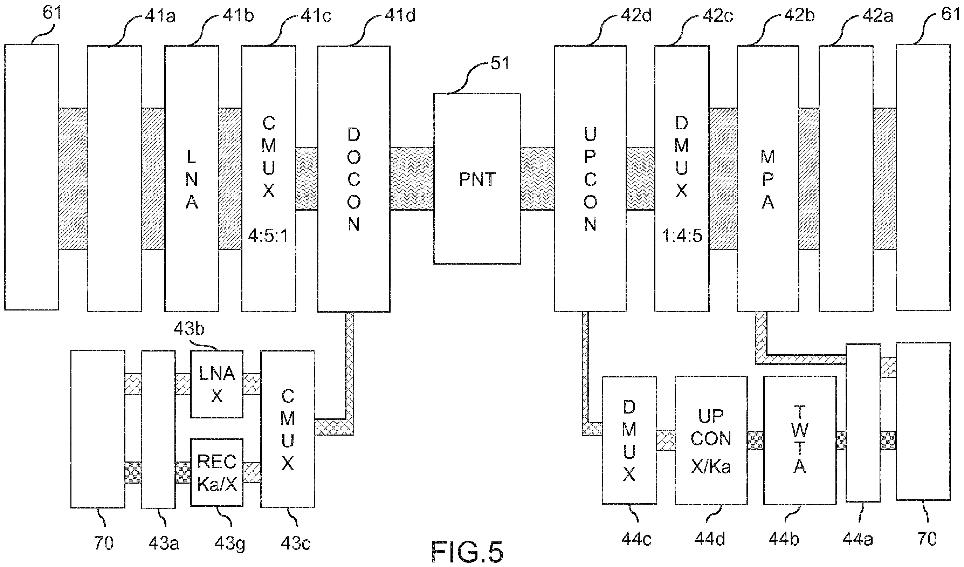

La figure 5 représente un schéma synoptique d'un exemple d'architecture générale de la charge utile du satellite selon un premier mode de réalisation de l'invention. La charge utile du satellite comporte un premier système d'antennes d'émission et de réception multifaisceaux 61 élaborant le premier et le deuxième ensemble de faisceaux 32, 33, un ensemble de chaînes de réception des signaux de radiocommunication relié en réception au système d'antennes multifaisceaux 61, un processeur numérique transparent PNT 51 relié en réception à l'ensemble de chaînes de réception, un ensemble de chaînes d'émission des signaux de radiocommunication relié en réception au Processeur Numérique Transparent 51 et en émission au système d'antennes multifaisceaux 61.

Le premier système d'antennes d'émission et de réception multifaisceaux 61 est destiné à élaborer au moins deux ensembles de faisceaux 32, 33 en émission et en réception. Le système d'antennes 61 peut, par exemple, être constitué d'une antenne à réflecteur déployable du type une source par faisceau SFPB (en anglais : single feed per beam) optimisée en isolation inter-faisceaux.

L'ensemble de chaînes de réception comporte des filtres 41a, des amplificateurs à faible bruit LNA 41b, des multiplexeurs de fréquence CMUX 41c et des convertisseurs de fréquence DOCON 41d qui assurent respectivement le filtrage, la réception, le multiplexage des canaux et l'abaissement de fréquence des signaux de radiocommunication provenant de la station d'ancrage 23.

L'ensemble de chaînes d'émission comporte des convertisseurs de fréquence UPCON 42d, des démultiplexeurs DMUX 42c, des amplificateurs de puissance MPA 42b et des filtres 42a qui assurent respectivement l'élévation de fréquence, le démultiplexage de canaux, l'amplification mutualisée et le filtrage des signaux de radiocommunication provenant des terminaux utilisateurs 35.

La charge utile du satellite comporte également un deuxième système d'antennes d'émission et de réception 70 assurant des liaisons entre le satellite et la station d'ancrage 23, le satellite transmettant les signaux provenant de la station d'ancrage 23 vers des terminaux utilisateurs 35 par l'intermédiaire du PNT 51. A la réception, le deuxième système d'antennes 70 est connecté à une chaîne de réception des signaux de radiocommunication provenant de la station d'ancrage 23 qui comporte des filtres 43a connectés à des amplificateurs à faible bruit 43b pour amplifier les signaux qui sont dans la bande X et à des récepteurs REC Ka/X 43g pour transposer en bande X les signaux qui sont en bande Ka, des multiplexeurs CMUX 43c qui combinent tous les signaux reçus et les transmettent sur une entrée du convertisseur de fréquence DOCON 41d puis en entrée du PNT 51. A l'émission, le deuxième système d'antennes 70 est connecté à une chaîne d'émission des signaux vers la station d'ancrage 23 qui est reliée à une sortie du PNT 51 par l'intermédiaire du convertisseur de fréquence UPCON 42d pour les signaux qui doivent être émis en bande Ka ou par l'intermédiaire de l'amplificateur de puissance mutualisé MPA 42b pour les signaux qui doivent être émis en bande X. La chaîne d'émission des signaux vers la station d'ancrage 23 comporte des démultiplexeurs DMUX 44c qui séparent les signaux provenant du convertisseur de fréquence UPCON 42d, des convertisseurs de fréquence 44d qui convertissent les signaux de la bande X vers la bande Ka, des amplificateurs de puissance TWTA 44b et des filtres 44a reliés au système d'antennes 70. Les signaux provenant de l'amplificateur de puissance mutualisé MPA 42b sont filtrés dans les filtres 44a avant d'être émis par le système d'antennes 70.

Le processeur numérique transparent PNT 51 assure le filtrage et le routage des signaux de radiocommunication. Ainsi, le processeur numérique transparent PNT 51 est destiné à gérer d'une part, le trafic maillé intra-spot et inter-spot entre des terminaux utilisateurs 35 situés dans un même spot 33, 34 ou dans deux spots différents et d'autre part, le trafic étoilé entre les terminaux 35 situés dans la zone de couverture globale 30 et la station d'ancrage située dans la zone de couverture de métropole 21. Les signaux de radiocommunication routés peuvent éventuellement être protégés du brouillage par exemple par une technique d'étalement de spectre par évasion de fréquence.

Le multiplexage en fréquence des canaux B1, B2, B3, B4, B5 par les multiplexeurs CMUX 41c en entrée du PNT 51 et par les démultiplexeurs DMUX 42c en sortie du PNT 51 permet de traiter et de router la totalité de la bande de fréquence allouée, par exemple 500 MHz en bande X, sur chaque port d'entrée 54 et de sortie 55 du PNT 51. Ainsi dans le cas de l'attribution de 4 canaux différents B1 à B4 aux spots 32, un port d'entrée ou de sortie du PNT 51 traite et route le trafic d'au moins quatre faisceaux. L'avantage est de réduire, typiquement par 4, de nombre de port actifs du PNT 51 et le nombre de convertisseurs abaisseurs de fréquence DOCON 41d et élévateurs de fréquence UPCON 42d.

L'amplification mutualisée à plusieurs faisceaux, par exemple huit faisceaux, peut avantageusement utiliser des amplificateurs multiports MPA (en anglais : Multi-Port Amplifier) 42b qui permettent de partager et échanger la puissance radiofréquence entre les signaux de radiocommunication circulant dans ces faisceaux. Les amplificateurs multiports MPA assurent l'amplification combinée et mutualisée des signaux de radiocommunication destinés aux terminaux utilisateurs 35 localisés dans plusieurs spots 32, 33, 34 différents. Par exemple, un amplificateur multiport MPA comportant huit ports d'entrée et huit ports de sortie permet d'amplifier les signaux contenus dans huit spots différents.

Le deuxième, et éventuellement le troisième, ensemble de spots 33 se superposant aux spots 32 du premier ensemble de spots est reconfigurable à la demande en nombre et en position par télécommande. Cette superposition temporaire permet d'augmenter localement la capacité offerte par le satellite sur la zone géographique couverte par les deux spots 32, 33 par le cumul des bandes passantes des deux canaux alloués aux deux spots correspondants.

Les amplificateurs à faible bruit LNA 41b peuvent avantageusement être équipés d'un limiteur de puissance pour protéger les chaînes de réception contre d'éventuels brouilleurs.

Dans un mode préféré de réalisation de l'invention, l'activation des spots locaux 33 du deuxième ensemble de spots est réalisée par les multiplexeurs de canaux CMUX 41c pour les spots en réception et les démultiplexeurs de canaux DMUX 42c pour les spots en émission.

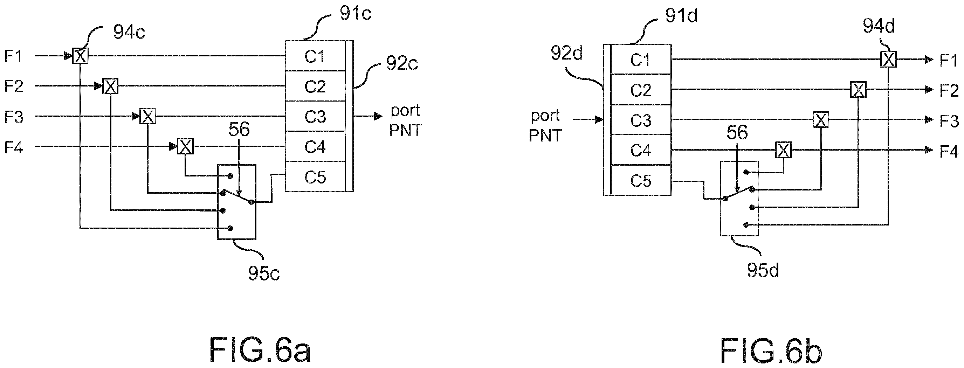

La figure 6a représente un exemple d'architecture électrique des multiplexeurs de canaux CMUX pouvant être utilisés dans la charge utile représentée sur la figure 5 et la figure 6b représente l'architecture électrique des démultiplexeurs de canaux DMUX correspondants. Chaque multiplexeur de canaux CMUX [4:5:1] 41c comporte quatre entrées sur lesquelles sont appliquées respectivement quatre faisceaux F1 à F4 différents, quatre coupleurs 94c, un commutateur 95c à quatre positions différentes comportant quatre entrées et une sortie reliée au canal B5, cinq filtres 91c fonctionnant respectivement dans les canaux B1 à B5 et un manifold 92c combinant les sorties des cinq filtres sur une seule sortie reliée à un port d'entrée du PNT 51. Chaque coupleur 94c comporte une entrée sur laquelle est appliquée l'un des quatre faisceaux F1 à F4, une première sortie connectée à l'une des quatre entrées du commutateur 95c et une deuxième sortie reliée à l'un des quatre canaux B1 à B4. La sortie du commutateur 95c est reliée à l'une des quatre entrées du commutateur 95c selon la position sélectionnée. Sur la figure 6a, la sortie du commutateur 95c est reliée à la deuxième entrée du commutateur qui est connectée en sortie du troisième coupleur sur lequel est appliqué le faisceau F3, le canal B5 est donc appliqué au faisceau F3 en plus du canal B3 et le spot correspondant au faisceau F3 a donc une capacité en fréquence augmentée correspondant aux capacités en fréquence cumulées des canaux B3 et B5. Le multiplexeur CMUX [4:5:1] 41c permet de sommer, pour l'un des faisceaux appliqués sur l'une de ses quatre entrées, le canal Bi, où Bi est l'un des canaux B1 à B4, au canal B5 et permet ainsi d'obtenir, localement, un spot 33 à capacité augmentée.

Les démultiplexeurs de canaux DMUX [1:5:4] 42c représentés sur la figure 6b ont une structure symétrique de la structure des multiplexeurs de canaux CMUX [4:5:1] représentés sur la figure 6a. Ils comportent une seule entrée reliée à un port de sortie du PNT 51, un manifold 92d relié à cinq filtres 91d différents fonctionnant respectivement dans les bandes de fréquence B1 à B5, quatre coupleurs 94d et un commutateur 95d à quatre positions différentes comportant une entrée reliée au canal B5 et quatre sorties. Chaque coupleur 94d comporte une première entrée sur laquelle est appliqué l'un des quatre canaux B1 à B4, une deuxième entrée connectée à l'une des quatre sorties du commutateur 95d et une sortie délivrant quatre faisceaux F1 à F4. Selon la position du commutateur, l'entrée du commutateur reliée au canal B5 est connectée sur l'une de ses quatre sorties et appliquée sur la deuxième entrée de l'un des quatre coupleurs correspondant. Sur la figure 6b, l'entrée du commutateur 95d est reliée à la deuxième sortie du commutateur qui est elle-même connectée au troisième coupleur délivrant le faisceau F3, le canal B5 est donc appliqué au faisceau F3 en plus du canal B3. Chaque démultiplexeur de canaux DMUX [1:5:4] permet donc, selon la position des commutateurs 95d, de sommer le canal B5 au canal Bi, où Bi est l'un des quatre canaux B1, B2, B3, B4, sur l'une des quatre sorties de faisceau F1 à F4. La position des commutateurs 95c, 95d est commandée par un signal de télécommande 56 envoyé par la station d'ancrage 23.

Il est ainsi possible dans le cas des exemples d'architectures électriques des CMUX et DMUX représentés aux figures 6a, 6b d'activer un spot local 33 du deuxième ensemble de spots parmi quatre spots du premier ensemble 32. Chaque nouvelle définition en nombre et position des spots est contrainte pour réutiliser au mieux la sous-bande de fréquence correspondant au canal spécifique B5, ainsi cette définition se fait de telle façon que la distance d2 entre deux spots 33 soit maximisée. La zone géographique couverte simultanément par deux spots 32, 33 du premier ensemble de spots et du deuxième ensemble de spots, bénéficie d'une capacité accrue. De cette façon il est possible d'augmenter temporairement et à la demande la capacité offerte sur des zones géographiques où sont concentrés des terminaux utilisateurs 35. Dans le cas des exemples d'architecture électrique des multiplexeurs CMUX et des démultiplexeurs DMUX représentés sur les figures 6a et 6b, la capacité en bande passante est le cumul des bandes passantes des deux canaux Bi et B5, où Bi est l'un des quatre canaux B1, B2, B3, B4.

Ce mode de réalisation permet de couvrir des zones de couverture de théâtre 31a, 31b et 31c où il y a une plus forte concentration de terminaux par un ou plusieurs spots à capacité augmentée si nécessaire.

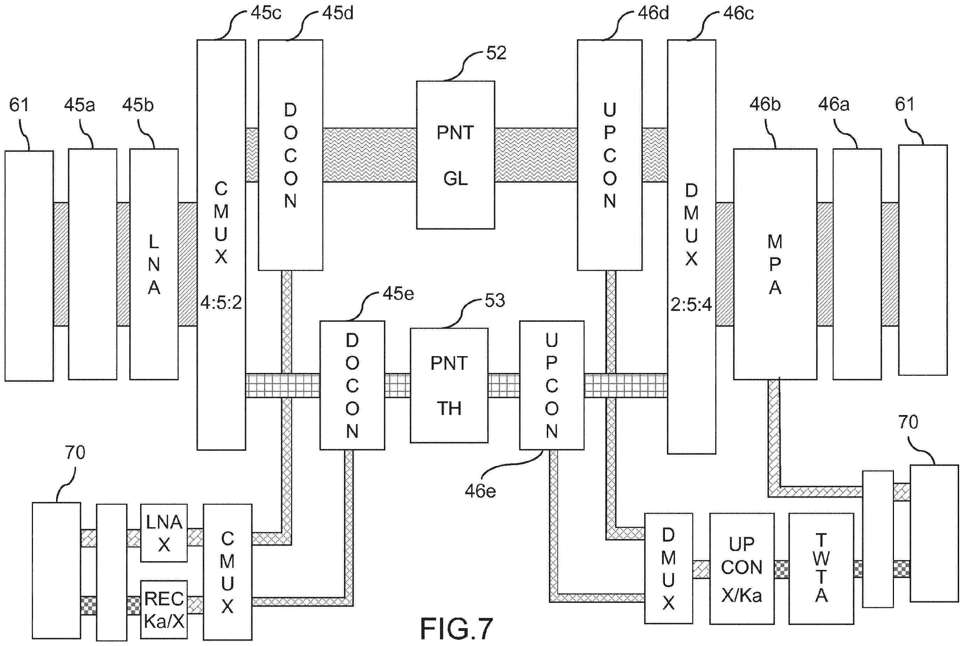

La figure 7 représente schématiquement l'architecture générale de la charge utile d'un satellite selon un deuxième mode de réalisation de l'invention. La charge utile comporte un premier système d'antennes multifaisceaux 61 qui élabore, en émission et en réception, au moins deux ensembles de faisceaux correspondant au sol, aux deux ensembles de spots 32, 33, relié en réception à un ensemble de chaînes de réception des signaux de radiocommunication provenant des terminaux utilisateurs 35, les chaînes de réception du premier ensemble de faisceaux étant connectées en entrée d'un premier processeur numérique transparent PNT/GL 52 et les chaînes de réception du deuxième ensemble de faisceaux étant connectées en entrée d'un deuxième processeur numérique transparent PNT/TH 53, les sorties du premier processeur numérique transparent PNT/GL 52 et du deuxième processeur numérique transparent PNT/TH 53 étant connectées en émission, à un ensemble de chaînes d'émission reliés en émission au premier système d'antennes multifaisceaux 61.

L'ensemble de chaînes de réception comporte des filtres 45a, des amplificateurs à faible bruit 45b, des multiplexeurs 45c et des convertisseurs de fréquence 45d, 45e qui assurent le filtrage, la réception, le multiplexage de canaux et le changement de fréquence des signaux de radiocommunication reçus par le système d'antennes multifaisceaux 61.

L'ensemble de chaînes d'émission comporte des convertisseurs de fréquence 46d, 46e, des démultiplexeurs 46c, des amplificateurs de puissance mutualisés 46b, des filtres 46a qui assurent le changement de fréquence, le démultiplexage de canaux, l'amplification mutualisée et le filtrage des signaux de radiocommunication routés par le premier processeur numérique transparent PNT/GL 52 et par le deuxième processeur numérique transparent PNT/TH 53.

Le premier processeur numérique transparent PNT/GL 52 assure le filtrage et le routage des signaux de radiocommunication reçus et émis dans les spots 32 correspondants au premier ensemble de faisceaux, le deuxième processeur numérique transparent PNT/TH 53 assure le filtrage et le routage des signaux de radiocommunication reçus et émis dans les spots locaux 33 correspondant au deuxième ensemble de faisceaux.

La charge utile du satellite comporte également un deuxième système d'antennes d'émission et de réception 70 assurant des liaisons entre le satellite 10 et la station d'ancrage 23, le satellite 10 transmettant les signaux provenant de la station d'ancrage 23 vers des terminaux utilisateurs 35 par l'intermédiaire d'un ensemble de chaînes de réception des signaux de radiocommunication provenant de la station d'ancrage 23, des PNT/GL 52 et du PNT/TH 53 et d'un ensemble de chaînes d'émission des signaux routés par le PNT/GL 52 et le PNT/TH/53. L'architecture des chaînes de réception des signaux de radiocommunication provenant de la station d'ancrage 23 et des chaînes d'émission des signaux routés par le PNT/GL 52 et le PNT/TH/53 est identique à l'architecture correspondante décrite pour le premier mode de réalisation de l'invention, en liaison avec la figure 5.

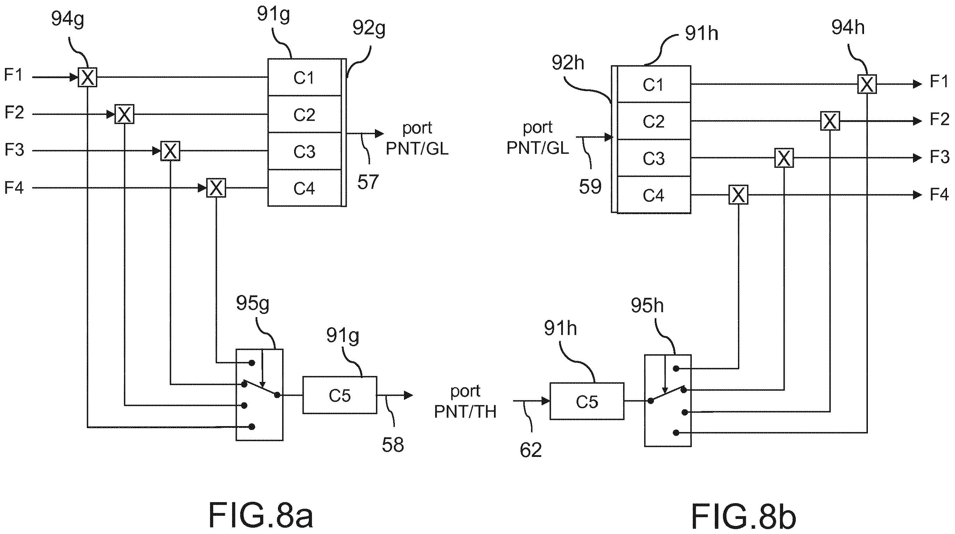

La figure 8a représente un exemple d'architecture électrique des multiplexeurs de canaux CMUX pouvant être utilisés dans la charge utile représentée sur la figure 7 et la figure 8b représente l'architecture électrique des démultiplexeurs de canaux DMUX correspondants. Chaque multiplexeur CMUX [4:5:2] 45c et chaque démultiplexeur DMUX [2:5:4] 46c comporte les mêmes composants que les multiplexeurs et les démultiplexeurs correspondants représentés sur les figures 6a et 6b. La seule différence est que chaque multiplexeur CMUX [4:5:2] 45c comporte deux sorties respectivement reliées à un port d'entrée 57 du PNT/GL 52 et à un port d'entrée 58 du PNT/TH 53 et chaque démultiplexeur DMUX [2:5:4] 46c comporte deux entrées respectivement connectées à un port de sortie 59 du PNT/GL 52 et à un port de sortie 62 du PNT/TH 53. La première sortie du multiplexeur 45c reliée à un port d'entrée 57 du PNT/GL 52 correspond à la sortie d'un manifold 92g reliée à quatre filtres 91g correspondant aux quatre canaux B1 à B4 attribués au premier ensemble de spots 32, la deuxième sortie du multiplexeur 45c reliée à un port d'entrée 58 du PNT/TH 53 correspond à la sortie d'un filtre 91g correspondant au canal spécifique B5 à capacité augmentée attribué au deuxième ensemble de spots 33. De même, symétriquement, la première entrée du démultiplexeur 46c reliée à un port de sortie 59 du PNT/GL 52 correspond à l'entrée d'un manifold 92h reliée à quatre filtres 91 h correspondant aux quatre canaux B1 à B4 attribués au premier ensemble de spots 32, la deuxième entrée du multiplexeur 45c reliée à un port d'entrée 62 du PNT/TH correspond à l'entrée d'un filtre 91h correspondant au canal spécifique B5 à capacité augmentée attribué au deuxième ensemble de spots 33. Le multiplexeur 45c comporte également quatre coupleurs 94g et un commutateur 95g à quatre positions et permet de sélectionner le canal spécifique B5 présent sur l'une des quatre entrées de faisceau F1 à F4 et de le router vers la deuxième sortie reliée au port d'entrée 58 du deuxième PNT/TH 53. De même, le démultiplexeur 46c comporte également quatre coupleurs 94h et un commutateur 95h à quatre positions et permet de router le canal spécifique B5 présent sur la deuxième entrée reliée au port de sortie 62 du deuxième PNT/TH 53 vers l'une des quatre sorties de faisceau F1 à F4.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de télécommunication par satellite permettant d'assurer un trafic en étoile et un trafic maillé, comportant un satellite (10), au moins une station d'ancrage terrestre (23) localisée dans une zone de couverture de métropole (21), une zone de couverture globale (30) et plusieurs terminaux utilisateurs (35), fixes ou mobiles, répartis dans la zone de couverture globale (30), une liaison de radiocommunication bidirectionnelle (22) entre la station d'ancrage (23) et le satellite (10), des liaisons de radiocommunication bidirectionnelles (36) entre le satellite (10) et les terminaux utilisateurs (35), une liaison de communication bidirectionnelle de télécommande et de télémesure (TTC) entre la station d'ancrage (23) et le satellite (10), le système étant configuré de manière à ce que la zone de couverture globale (30) est couverte par un premier ensemble de spots (32) de tailles identiques, se recouvrant partiellement et formant un maillage cellulaire régulier et par au moins un deuxième ensemble de spots (33) locaux, irrégulièrement répartis dans la zone de couverture globale (30), et se superposant géographiquement sur des spots (32) du premier ensemble de spots, et à ce que les spots (32) du premier ensemble de spots ont des premières bandes de fréquence allouées correspondant à N canaux différents (B1 à B4), où N est un nombre entier supérieur à 1, de même capacité en fréquence, un même canal étant utilisé par plusieurs spots (32) différents espacés au sol, les spots (33) locaux du deuxième ensemble de spots ont une deuxième bande de fréquence allouée correspondant à un canal spécifique (B5) ayant une capacité en fréquence augmentée, supérieure à la capacité en fréquence des canaux (B1 à B4) des spots (32) du premier ensemble de spots, le canal spécifique (B5) du deuxième ensemble de spots (33) étant différent des canaux (B1 à B4) du premier ensemble de spots (32).

2. Système de télécommunication par satellite selon la revendication 1, **caractérisé en ce que** la zone de couverture globale (30) est en outre couverte par un troisième ensemble de spots (34) locaux, irrégulièrement répartis dans la zone de couverture globale (30), et se superposant géographiquement sur des spots (32) du premier ensemble de spots, les spots (34) locaux du troisième ensemble de spots ayant une troisième bande de fréquence allouée correspondant à un canal spécifique additionnel (B6) à capacité en fréquence augmentée supérieure à la capacité en fréquence des canaux (B1 à B4) des spots (32) du premier ensemble de spots, le canal spécifique additionnel (B6) du troisième ensemble de spots locaux (34) étant différent des canaux (B1 à B4) alloués aux spots (32) du premier ensemble de spots et du canal spécifique (B5) alloué aux spots (33) du deuxième ensemble de spots locaux.

3. Système de télécommunication par satellite selon la revendication 1, **caractérisé en ce que** le satellite (10) comporte un premier système d'antennes d'émission et de réception multifaisceaux (61) illuminant d'une part, la totalité de la zone de couverture globale (30) et formant, au sol, le maillage cellulaire régulier de spots (32) du premier ensemble de spots et illuminant d'autre part, localement, des zones géographiques de la couverture globale (30) où sont concentrés des terminaux utilisateurs (35), par les spots locaux (33) irrégulièrement répartis du deuxième ensemble de spots, les zones géographiques illuminées par les spots locaux (33) du deuxième ensemble de spots étant sélectionnées et activées par la station d'ancrage (23) par l'intermédiaire de la liaison de communication bidirectionnelle de télécommande et de télémesure (TTC).

4. Système de télécommunication par satellite selon la revendication 1, **caractérisé en ce que** le satellite (10) comporte en outre au moins un processeur numérique transparent (51) destiné à filtrer et router le trafic maillé intra-spot et inter-spot entre des terminaux utilisateurs (35) situés dans un même spot (32, 33, 34) ou dans deux spots (32, 33, 34) différents et le trafic étoilé entre terminaux situés dans la zone de couverture globale (30) et la station d'ancrage (23) située dans la zone de couverture de métropole (21), le processeur numérique transparent (51) comportant des ports d'entrée (54) connectés au premier système d'antennes d'émission et de réception multifaisceaux (61) par un ensemble de chaînes de réception et des ports de sortie (55) connectés au premier système d'antennes d'émission et de réception multifaisceaux (61) par un ensemble de chaînes d'émission, chaque chaîne de réception comportant un multiplexeur de fréquence (41c) assurant le multiplexage en fréquence et la sélection de canaux différents (B1 à B5) présentés sur une même entrée (54) du processeur numérique transparent (51) et chaque chaîne d'émission comportant un démultiplexeur en fréquence (42c) assurant le démultiplexage et la sélection des canaux différents (B1 à B5) provenant d'une même sortie (55) du processeur numérique transparent (51).

5. Système de télécommunication par satellite selon la revendication 4, **caractérisé en ce que** l'ensemble de chaînes de réception comporte en outre des amplificateurs à faible bruit LNA (41b) équipés d'un limiteur de puissance.

6. Système de télécommunication par satellite selon la revendication 4, **caractérisé en ce que** l'ensemble de chaînes d'émission comporte en outre des amplificateurs de puissance multiports MPA (42b) assurant l'amplification combinée et mutualisée des signaux de radiocommunication destinés aux terminaux utilisateurs (35) localisés dans plusieurs spots différents (32, 33, 34).

7. Système de télécommunication par satellite selon la revendication 4, **caractérisé en ce que** le multiplexeur en fréquence (41c) de chaque chaîne de réception comporte N coupleurs (94c) et un commutateur (95c) à quatre positions différentes, la position de chaque commutateur étant commandée par la station d'ancrage (23), chaque commutateur sélectionnant un canal différent choisi parmi tous les canaux (B1 à B4) alloués aux spots (32) du premier ensemble de spots et parmi toutes les combinaisons couplant le canal spécifique (B5) alloué au deuxième ensemble de spots avec l'un desdits canaux (B1 à B4) alloués aux spots (32) du premier ensemble de spots, le canal sélectionné par chaque commutateur (95c) dépendant de la position du commutateur (93a) correspondant.

8. Système de télécommunication par satellite selon la revendication 7, **caractérisé en ce que** le démultiplexeur en fréquence (42c) comporte une architecture symétrique de l'architecture du multiplexeur en fréquence (41c) correspondant.

9. Système de télécommunication par satellite selon l'une quelconque des revendications 4 à 8, **caractérisé en ce que** le satellite (10) comporte au moins un premier processeur numérique transparent (52) destiné à filtrer et router le trafic correspondant aux spots (32) du premier ensemble de spots et au moins un deuxième processeur destiné à filtrer et router le trafic correspondant aux spots locaux (33) du deuxième ensemble de spots.

## Patentansprüche

1. Satelliten-Telekommunikationssystem, das die Sicherstellung eines sternförmigen Datenverkehrs und eines netzförmigen Datenverkehrs ermöglicht, beinhaltend einen Satelliten (10), mindestens eine terrestrische Dockstation (23), befindlich in einer Metropol-Deckungszone (21), eine globale Deckungszone (30) und mehrere Benutzerendgeräte (35), fest oder mobil, verteilt in der globalen Deckungszone (30), eine bidirektionale Funkkommunikationsverbindung (22) zwischen der Dockstation (23) und dem Satelliten (10), bidirektionale Funkkommunikationsverbindungen (36) zwischen dem Satelliten (10) und den Benutzerendgeräten (35), eine bidirektionale Fernsteuerungs- und Fernmessungs-Funkkommunikationsverbindung (TTC) zwischen der Dockstation (23) und dem Satelliten (10), wobei das System in der Weise konfiguriert ist, dass die globale Deckungszone (30) von einer ersten Gruppe von Spots (32) identischer Größe abgedeckt wird, welche einander teilweise überlappen und ein regelmäßiges zelluläres Netz bilden und durch eine zweite Gruppe von lokalen Spots (33), welche unregelmäßig in der globalen Deckungszone (30) verteilt sind und Spots (32) der ersten Gruppe geografisch überlagern, und dass die Spots (32) der ersten Gruppe von Spots erste zugewiesene Frequenzbänder besitzen, welche N unterschiedlichen Kanälen (B1 bis B4) entsprechen, wobei N eine Ganzzahl über 1 ist, mit gleicher Frequenzkapazität, wobei ein selber Kanal durch mehrere unterschiedliche Spots (32) verwendet wird, welche am Boden voneinander entfernt sind, wobei die lokalen Spots (33) der zweiten Gruppe von Spots ein zweites zugewiesenes Frequenzband besitzen, welches einem spezifischen Kanal (B5) entspricht, welcher eine erhöhte Frequenzkapazität besitzt, welche höher ist als die Frequenzkapazität der Kanäle (B1 bis B4) der Spots (32) der ersten Gruppe von Spots, wobei der spezifische Kanal (B5) der zweiten Gruppe von Spots (33) sich von den Kanälen (B1 bis B4) der ersten Gruppe von Spots (32) unterscheidet.

2. Satelliten-Telekommunikationssystem nach Anspruch 1, **dadurch gekennzeichnet, dass** die globale Deckungszone (30) zudem durch eine dritte Gruppe von lokalen Spots (34) abgedeckt wird, welche unregelmäßig in der globalen Deckungszone (30) verteilt sind und geographisch Spots (32) der ersten Gruppe von Spots überlagern, wobei die lokalen Spots (34) der dritten Gruppe von Spots ein drittes zugewiesenes Frequenzband besitzen, welches einem zusätzlichen spezifischen Kanal (B6) mit einer erhöhten Frequenzkapazität entspricht, welche höher ist als die Frequenzkapazität der Kanäle (B1 bis B4) der Spots (32) der ersten Gruppe von Spots, wobei der zusätzliche spezifische Kanal (B6) der dritten Gruppe von lokalen Spots (34) sich von den Kanälen (B1 bis B4) unterscheidet, welche den Spots (32) der ersten Gruppe von Spots zugewiesen sind und von dem spezifischen Kanal (B5), welcher den Spots (33) der zweiten Gruppe von lokalen Spots zugewiesen ist.

3. Satelliten-Telekommunikationssystem nach Anspruch 1, **dadurch gekennzeichnet, dass** der Satellit (10) ein erstes System von mehrstrahligen Sende- und Empfangsantennen (61) beinhaltet, welches einerseits die gesamte globale Deckungszone (30) bestrahlt und am Boden das regelmäßige, zelluläre Netz von Spots (32) der ersten Gruppe von Spots bildet und andererseits lokal geografische Zonen der globalen Deckungszone (30) bestrahlt, in welchen die Benutzerendgeräte (35) konzentriert sind, durch unregelmäßig verteilte lokale Spots (33) der zweiten Gruppe von Spots, wobei die durch die lokalen Spots (33) der zweiten Gruppe von Spots bestrahlten geografischen Zonen durch die Dockstation (23) durch Vermittlung der bidirektionalen Fernsteuerungs- und Fernmessungs-Verbindung (TTC) ausgewählt und aktiviert werden.

4. Satelliten-Telekommunikationssystem nach Anspruch 1, **dadurch gekennzeichnet, dass** der Satellit (10) zudem mindestens einen transparenten, digitalen Prozessor (51) beinhaltet, dazu bestimmt, den netzförmigen Datenverkehr zwischen den Spots und spotübergreifend zwischen Benutzerendgeräten (35), die sich in einem selben Spot (32, 33, 34) oder in zwei unterschiedlichen Spots (32, 33, 34) befinden, und den sternförmigen Datenverkehr zwischen Endgeräten, die sich in der globalen Deckungszone (30) und der Dockstation (23) befinden, welche in der Metropol-Deckungszone (21) befindlich ist, zu filtern und zu routen, wobei der transparente, digitale Prozessor (51) Eingangsports (54) besitzt, welche an das erste System von mehrstrahligen Sende- und Empfangsantennen (61) durch eine Gruppe von Empfangsketten und Ausgangsports (55) angeschlossen ist, welche mit dem ersten System von mehrstrahligen Sende- und Empfangsantennen (61) durch eine Gruppe von Sendeketten verbunden ist, wobei jede Empfangskette einen Frequenz-Multiplexer (41c) beinhaltet, welcher das Frequenz-Multiplexen und die Auswahl unterschiedlicher Kanäle (B1 bis B5), welche an einem selben Eingang (54) des transparenten digitalen Prozessors (51) vorhanden sind, gewährleistet, und jede Empfangskette einen Frequenz-Demultiplexer (42c) beinhaltet, welcher das Demultiplexen und die Auswahl der unterschiedlichen Kanäle (B1 bis B5) gewährleistet, welche von einem selben Ausgang (55) des transparenten, digitalen Prozessors (51) stammen.

5. Satelliten-Telekommunikationssystem nach Anspruch 4, **dadurch gekennzeichnet, dass** die Gruppe von Empfangsketten zudem rauscharme Verstärker LNA (41b) beinhaltet, welche mit einem Leistungsbegrenzer ausgestattet sind.

6. Satelliten-Telekommunikationssystem nach Anspruch 4, **dadurch gekennzeichnet, dass** die Gruppe von Sendeketten zudem Multiport-Leistungsverstärker MPA (42b) beinhaltet, welche die kombinierte und wechselseitige Verstärkung der Funkkommunikationssignale gewährleistet, die für die Benutzerendgeräte (35) bestimmt sind, die in mehreren unterschiedlichen Spots (32, 33, 34) befindlich sind.

7. Satelliten-Telekommunikationssystem nach Anspruch 4, **dadurch gekennzeichnet, dass** der Frequenz-Multiplexer (41c) einer jeden Empfangskette N Koppler (94c) und einen Umschalter (95c) mit vier unterschiedlichen Positionen beinhaltet, wobei die Position eines jeden Umschalters durch die Dockstation (23) gesteuert wird, wobei jeder Umschalter einen unterschiedlichen Kanal auswählt, gewählt aus allen Kanälen (B1 bis B4), welche den Spots (32) der ersten Gruppe von Spots zugewiesen sind, und aus allen Kombinationen, die den spezifischen Kanal (B5), welcher der zweiten Gruppe von Spots zugewiesen ist, mit einem der Kanäle (B1 bis B4) koppeln, welche den Spots (32) der ersten Gruppe von Spots zugewiesen sind, wobei der von einem jeden Umschalter (95c) ausgewählte Kanal von der Position des entsprechenden Umschalters (93a) abhängt.

8. Satelliten-Telekommunikationssystem nach Anspruch 7, **dadurch gekennzeichnet, dass** der Frequenz-Demultiplexer (42c) eine Architektur beinhaltet, die mit derjenigen des entsprechenden Frequenz-Multiplexers (41c) symmetrisch ist.

9. Satelliten-Telekommunikationssystem nach einem der vorhergehenden Ansprüche 4 bis 8, **dadurch gekennzeichnet, dass** der Satellit (10) mindestens einen ersten transparenten, digitalen Prozessor (52) beinhaltet, dazu bestimmt, den den Spots (32) der ersten Gruppe von Spots entsprechenden Datenverkehr zu filtern und zu routen, und mindestens einen zweiten Prozessor, dazu bestimmt, den den lokalen Spots (33) der zweiten Gruppe von Spots entsprechenden Datenverkehr zu filtern und zu routen.

## Claims

1. Satellite telecommunications system for providing star-like traffic and mesh traffic, comprising a satellite (10), at least one terrestrial docking station (23) located in a metropolitan coverage area (21), a global coverage area (30) and a plurality of fixed or mobile user terminals (35) distributed in the global coverage area (30), a bidirectional radio communication link (22) between the docking station (23) and the satellite (10), bidirectional radio communication links (36) between the satellite (10) and the user terminals (35), a bidirectional telemetry and command communication link (TTC) between the docking station (23) and the satellite (10), the system being configured so that the global coverage area (30) is covered by a first set of spots (32) of identical size, which partially overlap and which form a regular cellular network, and by at least a second set of local spots (33), irregularly distributed in the global coverage area (30) and superimposed geographically on spots (32) of the first set of spots, and so that the spots (32) of the first set of spots have first allocated frequency bands corresponding to N different channels (B1 to B4) having the same frequency capacity, where N is an integer greater than 1, the same channel being used by a plurality of different spots (32) spaced apart on the ground, the local spots (33) of the second set of spots have a second allocated frequency band corresponding to a special channel (B5) having an increased frequency capacity, greater than the frequency capacity of the channels (B1 to B4) of the spots (32) of the first set of spots, the special channel (B5) of the second set of spots (33) being different from the channels (B1 to B4) of the first set of spots (32).

2. Satellite telecommunications system according to claim 1, **characterised in that** the global coverage area (30) is further covered by a third set of local spots (34), irregularly distributed in the global coverage area (30) and geographically superimposed on spots (32) of the first set of spots, the local spots (34) of the third set of spots having a third allocated frequency band corresponding to a special additional channel (B6) having an increased frequency capacity greater than the frequency capacity of the channels (B1 to B4) of the spots (32) of the first set of spots, the special additional channel (B6) of the third set of local spots (34) being different from the channels (B1 to B4) allocated to the spots (32) of the first set of spots and from the special channel (B5) allocated to the spots (33) of the second set of local spots.

3. Satellite telecommunications system according to claim 1, **characterised in that** the satellite (10) comprises a first multi-beam transmitting and receiving antenna system (61) which, on the one hand, illuminates the whole of the global coverage area (30) and forms, on the ground, the regular cellular network of spots (32) of the first set of spots, and which, on the other hand, locally illuminates geographical areas of the global coverage (30) where user terminals (35) are concentrated, by the irregularly distributed local spots (33) of the second set of spots, the geographical areas illuminated by the local spots (33) of the second set of spots being selected and activated by the docking station (23) via the bidirectional telemetry and command communication link (TTC).

4. Satellite telecommunications system according to claim 1, **characterised in that** the satellite (10) further comprises at least one digital transparent processor (51) intended to filter and route the intra-spot and inter-spot mesh traffic between user terminals (35) located in the same spot (32, 33, 34) or in two different spots (32, 33, 34) and the star-like traffic between terminals located in the global coverage area (30) and the docking station (23) located in the metropolitan coverage area (21), the digital transparent processor (51) comprising input ports (54) connected to the first multi-beam transmitting and receiving antenna system (61) by a set of reception channels and output ports (55) connected to the first multi-beam transmitting and receiving antenna system (61) by a set of transmission channels, each reception channel comprising a frequency multiplexer (41c) for the frequency multiplexing and selection of different channels (B1 to B5) appearing at the same input (54) of the digital transparent processor (51) and each transmission channel comprising a frequency demultiplexer (42c) for the demultiplexing and selection of the different channels (B1 to B5) resulting from the same output (55) of the digital transparent processor (51).

5. Satellite telecommunications system according to claim 4, **characterised in that** the set of reception channels further comprises low-noise amplifiers LNA (41b) equipped with a power limiter.

6. Satellite telecommunications system according to claim 4, **characterised in that** the set of transmission channels further comprises multiport power amplifiers MPA (42b) for the combined and shared amplification of the radio communication signals intended for the user terminals (35) located in a plurality of different spots (32, 33, 34).

7. Satellite telecommunications system according to claim 4, **characterised in that** the frequency multiplexer (41c) of each reception channel comprises N couplers (94c) and a switch (95c) having four different settings, the setting of each switch being controlled by the docking station (23), each switch selecting a different channel chosen from among all the channels (B1 to B4) allocated to the spots (32) of the first set of spots and from among all combinations which couple the special channel (B5) allocated to the second set of spots to one of the channels (B1 to B4) allocated to the spots (32) of the first set of spots, the channel selected by each switch (95c) depending on the setting of the corresponding switch (93a).

8. Satellite telecommunications system according to claim 7, **characterised in that** the frequency demultiplexer (42c) comprises an architecture which is symmetrical with respect to the architecture of the corresponding frequency demultiplexer (41c).

9. Satellite telecommunications system according to any one of claims 4 to 8, **characterised in that** the satellite (10) comprises at least a first digital transparent processor (52) intended to filter and route the traffic corresponding to the spots (32) of the first set of spots and at least a second processor intended to filter and route the traffic corresponding to the local spots (33) of the second set of spots.
